# EUROPÄISCHE PATENTSCHRIFT

(11) **EP 1 739 067 B1**
(45) Veröffentlichungstag und Bekanntmachung des Hinweises auf die Patenterteilung: **01.08.2012**
(21) Anmeldenummer: 05105919.4
(22) Anmeldetag: 30.06.2005
(51) Int. Cl.: C05F 11/02, C05F 11/04, A01G 9/04, A01G 31/00

(54) **Verfahren zur Herstellung eines Bodenhilfsstoffs**
Process for manufacturing a soil conditioner
Procédé d'otention d'un amendement pour sols

(43) Veröffentlichungstag der Anmeldung: 03.01.2007
(73) Patentinhaber: Wolf, Roland, 47057 Duisburg (DE)
(72) Erfinder: Wolf, Roland, 47229 Duisburg (DE); Wedig, Harald, 6071 GL Swalmen (NL)
(74) Vertreter: von Kreisler Selting Werner

(56) Entgegenhaltungen:
- WO-A-03/093199
- CA-A1- 1 026 580
- US-B1- 6 352 568
- PATENT ABSTRACTS OF JAPAN Bd. 1999, Nr. 14, 22. Dezember 1999 (1999-12-22) & JP 11 255572 A (OKABE SANGYO KK; OKABE MASAKO), 21. September 1999 (1999-09-21)
- DATABASE WPI Section Ch, Week 199805 Derwent Publications Ltd., London, GB; Class C04, AN 1998-050549 XP002370303 & RU 2 082 702 C1 (CHELYABINSKUGOL PRODN ASSOC) 27. Juni 1997 (1997-06-27)
- PATENT ABSTRACTS OF JAPAN Bd. 2000, Nr. 14, 5. März 2001 (2001-03-05) & JP 2000 313683 A (KYUSHU BIBITTO:KK), 14. November 2000 (2000-11-14)
- PATENT ABSTRACTS OF JAPAN Bd. 2000, Nr. 08, 6. Oktober 2000 (2000-10-06) & JP 2000 139210 A (MASAKI NOBUYOSHI), 23. Mai 2000 (2000-05-23)

## Beschreibung

Die vorliegende Erfindung betrifft ein Verfahren zur Herstellung eines Bodenhilfsstoffs, den dadurch erhältlichen Bodenhilfsstoff und ein Bodenprodukt, dass den Bodenhilfsstoff enthält.

JP 11-255572 beschreibt ein Düngemittel enthaltend Reiskleie, Kartoffeln, Mikroorganismen, dem Holzkohle zugefügt wird.

JP 2000-139210 beschreibt einen Bodenverbesserer, der Muschelschalen und Holzkohle enthält und mit Mikroorganismen fermentiert wird.

Terra preta bezeichnet eine äußerst fruchtbare anthropogene Bodenart Amazoniens. Terra preta findet sich dort, wo Indiokulturen schon vor mehr als 2000 Jahren begannen, standorttreue Landwirtschaft zu betreiben. Es handelt sich um eine dunkle Bodenart, die sich durch hohe Verfügbarkeit von verschiedenen Wachstumsstoffen auszeichnet. Gefunden wurde in ihr Holzkohlestücke unterschiedlichster Größe, Ton, Schluff, Sand, Keramikreste, Kalk (Muscheln) sowie verwitterte organische Abfälle, wie zum Beispiel Knochen, Pflanzenreste, Fäkalien. Diese durch den Menschen entstandene Bodenart speichert Wasser und bewahrt Nährstoffe vor Auswaschung und Oxidierung, so dass sie wesentlich fruchtbarer ist, als die ursprünglich dort vorhandenen, stark oxidierten Böden des tropischen Regenwaldes.

Terra preta benötigt fast keine Düngemittel und liefert dauerhaft höhere Erträge als die im Rahmen der Brandrodung nur wenige Jahre hintereinander bewirtschafteten Böden.

Es ist schon versucht worden, Terra preta künstlich herzustellen, insbesondere wurde versucht, die genaue stoffliche Zusammensetzung zu ermitteln und nachzubauen. Dabei wurde die Rolle der Holzkohle als Wasserspeicher und Speicher der Nährstoffe erkannt. Die Fruchtbarkeit der Terra preta konnte dadurch aber nicht reproduziert werden.

Es besteht daher immer noch Bedarf nach einem Bodenhilfsstoff, der genutzt werden kann, um die Eigenschaften der Terra preta nachzuahmen.

Überraschenderweise wurde gefunden, dass ein solcher Bodenhilfsstoff erhalten werden kann, durch ein Verfahren, umfassend die folgenden Schritte:
a) Bereitstellen von Holzkohle mit einer mittleren Korngröße ≤ 25 mm,
b) Inkontaktbringen der Holzkohle mit Wasser und Pflanzennährstoffen, um ein Wachstumsmedium zu erhalten,
c) Inkontaktbringen des Wachstumsmediums mit Bodenmikroorganismen, um ein Kulturmedium zu erhalten,
d) Inkubation des Kulturmediums bei Temperaturen zwischen 25 bis 35°C für mindestens drei Tage.

Holzkohle besitzt die dem Ausgangstoff Holz eigenen Kapillare in unterschiedlichen Durchmessern. Hierdurch ergibt sich eine vielgestaltige, große Oberfläche. So hat 1 Gramm Holzkohle eine Oberfläche von bis zu 5.000 m². Die unterschiedlichen Durchmesser der Kapillaren sorgen auf engem Raum für unterschiedliche Lebensbedingungen. Die Kapillarkräfte verhindern eine Ausdunstung des in der Holzkohle gespeicherten Wassers. Belüftete und unter Luftabschluss stehende Bereiche liegen hierbei dicht beieinander.

Im Gegensatz zu bisherigen Ansätzen, in der Holzkohle nur als Wasser- und Nährstoffspeicher angesehen wurde, wird erfindungsgemäß eine biologische Aktivierung mit Bodenmikroorganismen erreicht. Die Holzkohle dient somit nicht nur als physikalisches Speichermedium für Wasser und Nährstoffe, sondern zugleich als Träger und Lebensraum für Mirkoorganismen. Es wird vermutet, dass dies eine optimale Erschließung der Nährstoffe und Mineralien für die Pflanzenwurzeln ermöglicht.

Als "Mikrobiotop" bietet Holzkohle sowohl aerobe als auch anaerobe Bereiche. Die Mikroorganismen überleben in der Holzkohle auch dann noch, wenn das umgebende Substrat durch Austrocknung oder Auswaschung als Lebensraum unbrauchbar wird.

Erfindungsgemäß kann Holzkohle verschiedenster Holzarten eingesetzt werden und zwar sowohl sortenreine Holzkohle als auch Holzkohle, die aus mehreren Holzarten gemischt wird. Geeignete Holzkohle ist beispielsweise Buchenholzkohle.

Die Holzkohle wird typischerweise zerkleinert eingesetzt, wobei die bevorzugte Korngröße im Bereich von 2-10 mm liegt. Sie wird anschließend mit Wasser und Pflanzennährstoffen in Kontakt gebracht. Pflanzennährstoffe können organische oder anorganischer Herkunft sein. Typische Pflanzennährstoffe sind insbesondere Nitrat, Phosphat und Kalium.

Die einzusetzenden Mengen an Wasser und Pflanzennährstoffen hängen ab von der Art der Holzkohle. Für 1 Kilogramm Holzkohle haben sich Mengen von 1-3 kg Wasser und 0,05-0,02 kg Pflanzennährstoffe (Trockengewicht) als geeignet erwiesen. Die Holzkohle wird mit Wasser und den Pflanzennährstoffen vermischt und anschließend mit Bodenmikroorganismen in Kontakt gebracht. Die Bodenmikroorganismen werden beispielsweise in Form von Bodenproben eingebracht. Alternativ hierzu können auch Mikroorganismennährlösungen verwendet werden, in denen eine spezifische Zusammensetzung der Mikroorganismen erreicht wird. Im Bodenhilfsstoff befindet sich eine Mischung einer Vielzahl von Bakterien, unter anderem anaerobe und aerobe Bakterien, Stickstofffixierer, Photosynthesebakterien, aber auch Myzeten.

Ein besonders geeignete Mischung ist beispielsweise unter dem Namen "effektive Mikroorganismen" erhältlich unter anderem von den Firmen Mikro Veda Handelsgesellschaft mbH in Xanten oder EMIKO Handelsgesellschaft mbH in Dützhof. Effektive Mikroorganismen sind Mischungen von über 80 Arten von Mikroorganismen, die symbiotisch zusammen leben. Hefen, Milchsäurebakterien und Photosynthesebakterien bilden dabei die größte Gruppe. Die verschiedenen Gruppen leben teils von den Stoffwechselprodukten der anderen.

Nach Kombination von Holzkohle, Wasser, Nährstoffen und Mikroorganismen erfolgt eine Inkubation des Kulturmediums bei geeigneten Wachstumstemperaturen, typischerweise zwischen 25-35 °C. Eine geeignete Zeitdauer hängt ab von der Art der eingesetzten Mikroorganismen. Sie liegt typischerweise bei einem Zeitraum von 5-10 Tagen.

Hierdurch wird die Holzkohle besiedelt (beimpft). In typischen, humusarmen Böden sind solche Mikroorganismen wetterbedingten Milieuwechseln ausgesetzt, denen sie nicht standhalten können. Dauerhafte Bodenimpfungen mit Mikroorganismen scheiterten daher nach kurzer Zeit, weil durch Austrocknung oder Ausschwemmung Mikroorganismen verloren gehen und eine Rückbesiedlung nur sehr zögerlich und nicht vollständig eintritt. Durch die Bereitstellung des "Mikrobiotops" in der Holzkohle ist eine Rückbesiedlung des Bodens wesentlich vereinfacht. Nur diese kontinuierliche Besiedlung führt zusammen mit Durchlüftung, Wasserhaltekapazität und Nährstoffspeicherfähigkeit zu einem äußerst fruchtbaren Bodenhilfs- und -nährstoff.

Grundsätzlich kann der Bodenhilfsstoff so direkt in Böden eingearbeitet werden. Er kann auch direkt in reiner Form in Pflanztöpfen als Ersatz für Hydrokultursubstrate eingesetzt werden. Er kann aber auch mit Erde oder einem anderen Pflanzsubstrat zunächst vermischt werden und dann aufgebracht oder verpackt und zur späteren Verwendung gelagert werden. Auch der Bodenhilfsstoff kann verpackt und zur späteren Verwendung gelagert werden.

Gegenstand der Erfindung ist weiterhin ein Bodenhilfsstoff, der durch das erfindungsgemäße Verfahren erhältlich ist.

Gegenstand der Erfindung ist weiterhin ein Bodenhilfsstoff enthaltend Holzkohle mit einer mittleren Korngröße ≤ 25 mm, Wasser, Pflanzennährstoffe und Bodenmikroorganismen, wobei die Bodenmikroorganismen eine Mischung enthaltend anaerobe und aerobe Bakterien, Stickstofffixierer, Photosynthesebakterien und Myzeten sind, und die Holzkohle mit den Bodenmikroorganismen besiedelt ist.

Gegenstand der Erfindung ist weiterhin ein Bodenprodukt enthaltend den Bodenhilfsstoff und Erde oder ein anderes Pflanzensubstrat in einem Gewichtsverhältnis von 1:99 bis 20:80 Gew.-%.

Die vorliegende Erfindung wird durch die folgenden Beispiele näher beschrieben

### Beispiel 1

10 kg Holzkohle mit einer mittleren Korngröße von 15 mm, gewonnen aus handelsüblicher Buchenholzgrillkohle, die gemörsert wurde, wurden mit 25 I Wasser und 1,5 kg handelsüblichem NPK-Pflanzendünger (Stickstoff, Phosphor, Kalium) versetzt. Die Mischung wurde innig vermischt. Anschließend wurden effektive Mikroorganismen in einer Menge von 1 I EM 1 nach Professor Teruo Higa, Landwirtschaftliche Fakultät der Ryukyu-Universität Okinawa, Japan (Firma Veda Handelsgesellschaft mbH) als wässrige Lösung aufgesprüht.

Diese Mischung wurde bei einer Temperatur von 30 bis 35°C für einen Zeitraum von 9 Tagen in einer lichtgeschützten Brutvorrichtung gelagert.

Das erhaltene Produkt wurde mit 225 I Pflanzerde vermischt. Die so behandelte Erde wurde als Pflanzsubstrat für 100 unbewurzelte Johannisbeerstecklingen eingesetzt.

Den derart gepflanzten Stecklingen wurden zwei Vergleichsgruppen vorgestellt:

Vergleichsgruppe 1: 100 Johannisbeerstecklinge wurden im Vergleichsboden ohne den oben beschriebenen Bodenhilfs- und Nährstoff gepflanzt. Es erfolgte zu Beginn eine Düngung mit Vergleichspflanzendünger.

Vergleichsgruppe 2: 100 Johannisbeerstecklinge wurden im Vergleichsboden folgender Beschaffenheit gepflanzt: Dem Vergleichsboden wurde dieselbe Menge der wie in Beispiel 1 beschriebenen mit Wasser und Nährstoffen versetzten Holzkohle beigemischt, ohne diese zuvor mit EM1 zu durchmengen und zu inkubieren.

Die Pflanzung aller Gruppen erfolgte in 2,5 I Töpfen als Freilandversuch. Nach der Initialwässerung wurden alle Gruppen nicht mehr künstlich gewässert.

Nach 4 Monaten waren folgende Resultate festzustellen:
- Vergleichsgruppe 1:: Totalausfall der Setzlinge.
- Vergleichsgruppe 2:: 60% der Setzlinge waren angegangen, jedoch von kümmerlichem Wuchs und durch Trockenheit geschädigt. Bei fast allen Setzlingen waren die Blätter teilweise gelb verfärbt.
- Gruppe nach Beispiel 1:: Alle Setzlinge waren angegangen und kräftiger gewachsen als die Setzlinge in Vergleichsgruppe 2. Die Blätter zeigten durchgängig sattgrüne Färbung.

### Beispiel 2

10 kg Weidenholzkohle einer mittleren Korngröße von 20 mm wurden mit 30 I Wasser und 2 kg handelsüblichem NPK-Pflanzendünger (Stickstoff, Phosphor, Kalium) versetzt. Die Mischung wurde innig vermischt. Anschließend wurden 1 I effektive Mikroorganismen EM 1 nach Professor Teruo Higa, Landwirtschaftliche Fakultät der Ryukyu-Universität Okinawa, Japan als wässrige Lösung mit einer Gießkanne aufgetragen.

Diese Mischung wurde bei einer Temperatur von 30 bis 35°C für einen Zeitraum von 10 Tagen in einer lichtgeschützten Brutvorrichtung gelagert.

Das erhaltene Produkt wurde mit 120 I Pflanzerde vermischt. Die so behandelte Erde wurde als Pflanzsubstrat für 100 unbewurzelte Johannisbeerstecklinge eingesetzt.

## Patentansprüche

1. Verfahren zur Herstellung eines Bodenhilfsstoffs umfassend die folgenden Schritte
a) Bereitstellen von Holzkohle mit einer mittleren Korngröße ≤ 25 mm,
b) Inkontaktbringen der Holzkohle mit Wasser und Pflanzennährstoffen, um ein Wachstumsmedium zu erhalten,
c) Inkontaktbringen des Wachstumsmediums mit Bodenmikroorganismen, um ein Kulturmedium zu erhalten,
d) Inkubation des Kulturmediums bei Temperaturen zwischen 25 bis 37°C für mindestens drei Tage.

2. Verfahren nach Anspruch 1, **dadurch gekennzeichnet, dass** die Holzkohle eine mittlere Korngröße zwischen 2 und 10 mm aufweist.

3. Verfahren nach einem der Ansprüche 1 oder 2, **dadurch gekennzeichnet, dass** die Pflanzennährstoffe organischer oder anorganischer Herkunft sind.

4. Verfahren nach einem der Ansprüche 1 bis 3, **dadurch gekennzeichnet, dass** pro kg Holzkohle 1 bis 3 kg Wasser und 0,05 bis 0,2 kg Pflanzennährstoffe zugesetzt werden.

5. Verfahren nach einem der Ansprüche 1 bis 4, **dadurch gekennzeichnet, dass** die Bodenmikroorganismen in Form von Bodenproben oder in Form von Mikroorganismen-Nährlösungen zugefügt werden.

6. Verfahren nach einem der Ansprüche 1 bis 5, **dadurch gekennzeichnet, dass** die Mikroorganismen ausgewählt aus anaeroben und aeroben Bakterien, Stickstoffbindern, Photosynthesebakterien, Myzeten und Mischungen davon ausgewählt werden.

7. Verfahren nach einem der Ansprüche 1 bis 6, **dadurch gekennzeichnet, dass** die Inkubation für einen Zeitraum von fünf bis zehn Tagen erfolgt.

8. Verfahren nach einem der Ansprüche 1 bis 7, **dadurch gekennzeichnet, dass** der Bodenhilfsstoff mit Erde oder einem anderen Pflanzensubstrat vermischt wird.

9. Bodenhilfsstoff enthaltend Holzkohle mit einer mittleren Korngröße ≤25mm, Wasser, Pflanzennährstoffe und Bodenmikroorganismen, wobei die Bodenmikroorganismen eine Mischung enthaltend anaerobe und aerobe Bakterien, Stickstofffixierer, Photosynthesebakterien und Myzeten sind, und die Holzkohle mit den Bodenmikroorganismen besiedelt ist.

10. Bodenhilfsstoff nach Anspruch 9 erhältlich durch ein Verfahren gemäß Anspruch 1.

11. Bodenprodukt enthaltend einen Bodenhilfsstoff nach einem der Ansprüche 9 oder 10 sowie Erde oder ein anderes Pflanzensubstrat in einem Gewichtsverhältnis von 1:99 bis 20:80 Gew.-%.

## Claims

1. A process for preparing a soil conditioner, comprising the following steps:
a) providing charcoal having an average grain size of ≤ 25 mm;
b) contacting the charcoal with water and plant nutrients to obtain a growth medium;
c) contacting the growth medium with soil microorganisms to obtain a culture medium;
d) incubating the culture medium at temperatures of from 25 to 37 °C for at least three days.

2. The process according to claim 1, **characterized in that** said charcoal has an average grain size of from 2 to 10 mm.

3. The process according to either of claims 1 or 2, **characterized in that** said plant nutrients are of organic or inorganic origin.

4. The process according to any of claims 1 to 3, **characterized in that** from 1 to 3 kg of water and from 0.05 to 0.2 kg of plant nutrients are added per 1 kg of charcoal.

5. The process according to any of claims 1 to 4, **characterized in that** said soil microorganisms are added in the form of soil samples or in the form of microorganism nutrient solutions.

6. The process according to any of claims 1 to 5, **characterized in that** said microorganisms are selected from anaerobic and aerobic bacteria, diazotrophs, photosynthetic bacteria, fungi and mixtures thereof.

7. The process according to any of claims 1 to 6, **characterized in that** said incubation is performed for a period of five to ten days.

8. The process according to any of claims 1 to 7, **characterized in that** said soil conditioner is mixed with soil or another plant substrate.

9. A soil conditioner containing charcoal having an average grain size of ≤ 25 mm, water, plant nutrients and soil microorganisms, wherein said soil microorganisms are a mixture containing anaerobic and aerobic bacteria, diazotrophs, photosynthetic bacteria and fungi, and said charcoal is colonized by said soil microorganismd.

10. The soil conditioner according to claim 9, obtainable by a process according to claim 1.

11. A soil product containing a soil conditioner according to either of claims 9 or 10 as well as soil or another plant substrate at a weight ratio of from 1:99 to 20:80 by weight.

## Revendications

1. Procédé d'obtention d'un amendement pour sols, comprenant les étapes suivantes :
a) préparation de charbon de bois ayant une taille de grains moyenne ≤ 25 mm,
b) mise en contact du charbon de bois avec de l'eau et des nutriments pour les plantes afin d'obtenir un milieu de croissance,
c) mise en contact du milieu de croissance avec des microorganismes du sol afin d'obtenir un milieu de culture,
d) incubation du milieu de culture à des températures entre 25 et 37 °C pendant au moins trois jours.

2. Procédé selon la revendication 1, **caractérisé en ce que** le charbon de bois présente une taille de grains moyenne entre 2 et 10 mm.

3. Procédé selon une des revendications 1 ou 2, **caractérisé en ce que** les nutriments pour les plantes sont d'origine organique ou inorganique.

4. Procédé selon une des revendications 1 à 3, **caractérisé en ce que**, pour chaque kg de charbon de bois, 1 à 3 kg d'eau et 0,05 à 0,2 kg de nutriments pour les plantes sont ajoutés.

5. Procédé selon une des revendications 1 à 4, **caractérisé en ce que** les microorganismes du sol sont ajoutés sous forme d'échantillons de sol ou sous forme de solutions nutritives de microorganismes.

6. Procédé selon une des revendications 1 à 5, **caractérisé en ce que** les microorganismes sont sélectionnés parmi des bactéries anaérobies ou aérobies, des fixateurs d'azote, des bactéries photosynthétiques, des mycètes et des mélanges de ceux-ci.

7. Procédé selon une des revendications 1 à 6, **caractérisé en ce que** l'incubation est effectuée pendant une période de cinq à dix jours.

8. Procédé selon une des revendications 1 à 7, **caractérisé en ce que** l'amendement pour sols est mélangé à de la terre ou à un autre substrat pour plantes.

9. Amendement pour sols contenant du charbon de bois avec une taille de grains moyenne ≤ 25 mm, de l'eau, des nutriments pour les plantes et des microorganismes du sol, les microorganismes du sol étant un mélange contenant des bactéries anaérobies ou aérobies, des fixateurs d'azote, des bactéries photosynthétiques, des mycètes, et le charbon de bois étant peuplé avec les microorganismes du sol.

10. Amendement pour sols selon la revendication 9, pouvant être obtenu par un procédé selon la revendication 1.

11. Produit pour sols contenant un amendement pour sols selon une des revendications 9 ou 10 ainsi que de la terre ou un autre substrat pour plantes dans un rapport de poids de 1:99 à 20:80 %-poids.
